# EUROPEAN PATENT APPLICATION

(11) **EP 3 322 016 A1**
(43) Date of publication of application: **16.05.2018**
(21) Application number: 16821604.2
(22) Date of filing: 04.07.2016
(51) Int. Cl.: H01M 8/04007

(54) **FUEL CELL SYSTEM**

(30) Priority: 08.07.2015 KR 20150096884
(71) Applicant: Kyungdong Navien Co., Ltd., Pyeongtaek-si, Gyeonggi-do 17704 (KR)
(72) Inventor: PARK, Woo Sung, Seoul 08501 (KR); LEE, You Bin, Seoul 08501 (KR)
(74) Representative: Habermann, Hruschka & Schnabel
(86) International application number: PCT/KR2016/007178
(87) International publication number: WO 2017/007198

(57) **Abstract**

The present invention relates to a fuel cell system comprising: a fuel cell configured to generate electricity and heat by a reaction between hydrogen and oxygen; a heat storage tank provided therein with a storage heat exchange unit configured to perform heat exchange between the heat recovered from the fuel cell and a fluid contained in the heat storage tank; a heat media supply line and a heat media recovery line configured to interconnect the fuel cell and the storage heat exchange unit to form a circulation flow channel of heat media; a bypass line branched from the heat media supply line and connected to the heat media recovery line; a flow channel switching device configured to selectively switch the flow channel of the heat media flowing along the heat media supply line to the storage heat exchange unit or the bypass line; and a controller configured to control the flow channel switching device such that the flow channel of the heat media flowing along the heat media supply line is connected to the storage heat exchange unit when the fuel cell generates power, and the flow channel of the heat media flowing along the heat media supply line is connected to the bypass line when the fuel cell stops power generation.

## Description

### [Technical Field]

The present disclosure relates to a fuel cell system, and more particularly, to a fuel cell system using heat generated from a fuel cell as a heat source for heating and hot water.

### [Background Art]

Fossil fuels, which are conventionally used as energy sources, have problems of depletion and environmental pollution, so fuel cells are being developed as an alternative to such fossil fuels.

The fuel cell is a power generation device configured to convert chemical energy into electrical energy, in which an electrochemical reaction between hydrogen and oxygen is performed, an energy difference between energy before the reaction and energy after the reaction is converted into electrical energy, and reaction heat and water are generated as by-products.

In recent years, technologies of recovering heat generated by power generation in a fuel cell to cool the fuel cell while using the fuel cell as a heat source for heating or hot water have been developed.

As an example of related art, Korean Patent Registration No. 10-1404138 discloses an apparatus for controlling a temperature of hot water in a waste heat recovery system, the apparatus including: a waste heat exchanger configured to recover waste heat from a waste heat source (fuel cell) to generate hot water; a hot water tank having a heating heat exchanger configured to perform heat exchange with the hot water to provide heating; a boiler configured to heat the hot water heat-exchanged by the hot water tank to satisfy a predetermined heating temperature and a predetermined hot water temperature set by a user, and supply the heated hot water to a heating space and a hot water space; a three-way valve installed in a hot water line between the hot water tank and the boiler to selectively supply direct water or the hot water introduced from the hot water tank to the boiler; and a controller configured to control the three-way valve to shut off the hot water introduced from the hot water tank and supply the direct water to the boiler when a temperature of the hot water tank is slightly lower than the predetermined hot water temperature of the boiler, so that the temperature of the hot water may be prevented from being suddenly increased when the hot water is used and so that the hot water may be stably supplied at the predetermined hot water temperature.

As another related art, Korean Patent Registration No. 10-0820144 discloses a system for supplying heating and hot water using a fuel cell, the system including: a boiler; a fuel cell; a storage tank filled with a fluid; a first heat exchanger configured to recover reaction heat generated from the fuel cell; an inlet line and an outlet line configured to connect the storage tank to the first heat exchanger; a heat radiation line embedded in a floor; a heating fluid supply line configured to connect the storage tank, the boiler, and the heat radiation line to each other; a recovery line configured to connect the heat radiation line to the storage tank; a flow rate control unit configured to control a flow of a fluid in the heating fluid supply line; and a hot water line connected to the boiler and the storage tank such that water is supplied from an outside to supply the hot water through the boiler and the storage tank, so that the heating and the hot water may be provided by the reaction heat generated from the fuel cell and combustion heat of the boiler.

Meanwhile, the reaction heat at high temperatures (600 °C to 700 °C) is generated when the fuel cell generates power, and heat media circulating between the fuel cell and the hot water tank (storage tank) perform a function of recovering the reaction heat of the fuel cell and cooling the fuel cell to a temperature at which the fuel cell operate. In addition, when the fuel cell stops power generation, a cooling operation of the fuel cell is performed by continuously circulating the heat media to recover the reaction heat generated from the fuel cell.

However, when the heat media are circulated between the fuel cell and the hot water tank (storage tank) in a state in which the power generation of the fuel cell has been stopped, a temperature of the heat media gradually decreases while the heat media receive heat from the hot water stored in the hot water tank (storage tank), and thus cooling efficiency of the fuel cell is low and a large amount of time is needed to cool the fuel cell to a predetermined temperature, which leads to a problem in that the fuel cell may not be reactivated at a desired time. In addition, the hot water stored in the hot water tank (storage tank) transfers heat to the heat media, thereby causing heat loss.

### [Disclosure]

### [Technical Problem]

In order to solve the above problems, the present disclosure is directed to providing a fuel cell system in which a fuel cell may be rapidly cooled when the fuel cell stops power generation, so that power generation of the fuel cell may be resumed at a desired time and heat loss in a heat storage tank may be minimized even during a cooling operation of the fuel cell.

### [Technical Solution]

In order to realize the above objects, according to the present disclosure, a fuel cell system (1) includes: a fuel cell (100) configured to generate electricity and heat by a reaction between hydrogen and oxygen; a heat storage tank (200) provided therein with a storage heat exchange unit (210) configured to perform heat exchange between the heat recovered from the fuel cell (100) and a fluid contained in the heat storage tank (200); a heat media supply line (410) and a heat media recovery line (420) configured to interconnect the fuel cell (100) and the storage heat exchange unit (210) to form a circulation flow channel of heat media; a bypass line (430) branched from the heat media supply line (410) and connected to the heat media recovery line (420); a flow channel switching device configured to selectively switch the flow channel of the heat media flowing along the heat media supply line (410) to the storage heat exchange unit (210) or the bypass line (430); and a controller (700) configured to control the flow channel switching device such that the flow channel of the heat media flowing along the heat media supply line (410) is connected to the storage heat exchange unit (210) when the fuel cell (100) generates power, and such that the flow channel of the heat media flowing along the heat media supply line (410) is connected to the bypass line (430) when the fuel cell (100) stops power generation.

According to one exemplary embodiment, the flow channel switching device may include a three-way valve (440) provided at a connection portion between the heat media supply line (410) and the bypass line (430).

According to another exemplary embodiment, the flow channel switching device may include: a first valve (441) provided in the bypass line (430); and a second valve (442) provided in the heat media supply line (410) at a position spaced away from a connection portion between the heat media supply line (410) and the bypass line (430) toward the heat storage tank (200), and configured to be opened or closed inversely to the first valve (441).

The heat media recovery line (420) may include a temperature sensor (450) configured to measure a temperature of the heat media recovered into the fuel cell (100) and includes a cooling device (460) configured to cool the recovered heat media, and the controller (700) may control an operation of the cooling device (460) such that the temperature of the heat media measured by the temperature sensor (450) does not exceed a predetermined cooling temperature of the heat media set for cooling the fuel cell (100).

The heat storage tank (200) may include a heating heat exchange unit (220) configured to perform heat exchange between the fluid contained in the heat storage tank (200) and heating water. The heating water which is heat-exchanged at the heating heat exchange unit (220) may be used for heating, and when a temperature of the heating water passing through the heating heat exchange unit (220) is lower than a predetermined heating temperature, the heating water may be heated by a boiler (300) to reach the predetermined heating temperature and supplied to a heating destination (500).

The fluid contained in the heat storage tank (200) may be used as hot water, and when a temperature of the hot water contained in the heat storage tank (200) is lower than a predetermined hot water temperature, the hot water supplied from the heat storage tank (200) may be heated by a boiler (300) to reach the predetermined hot water temperature and supplied to a hot water destination (600) .

### [Advantageous Effects]

According to the fuel cell system of the present disclosure, the bypass line is connected between the heat media supply line and the heat media recovery line, which are configured to connect the fuel cell to the storage heat exchange unit to form the circulation flow channel of the heat media, and the flow channel switching device, which is configured to allow the heat media to flow through the storage heat exchange unit when the fuel cell generates power and to allow the heat media to flow along the bypass line when the fuel cell stops the power generation, is provided so that the cooling efficiency of the fuel cell can be improved and heat loss in the heat storage tank can be minimized.

In addition, the heat media recovery line includes the temperature sensor and the cooling device, and the temperature measured by the temperature sensor is compared with the predetermined cooling temperature of the heat media to control the operation of the cooling device, so that the fuel cell can be maintained at a low operation temperature which enables the power generation.

Further, the heat recovered from the fuel cell and stored in the heat storage tank is used as a heat source for using the heating or the hot water, and when the temperature of the heating water or the hot water supplied from the heat storage tank is lower than the predetermined heating temperature or the predetermined hot water temperature set by the user, the heating water or the hot water is heated by the combustion heat of the boiler so as to be supplied, so that the heating water and the hot water can be stably supplied at the predetermined temperature.

Moreover, the heat source recovered from the fuel cell and a heat source of the boiler are used as a heating source for the heating water and the hot water, such that there is an economical effect that fuel consumption of the boiler can be reduced in comparison to a case in which only the boiler is used.

### [Description of Drawings]

FIG. 1 is a schematic view of a fuel cell system according to one exemplary embodiment of the present disclosure.
FIG. 2 is a control block diagram for a cooling operation of a fuel cell.
FIG. 3 is a view illustrating a flow of heat media when the fuel cell generates power in the fuel cell system according to one exemplary embodiment of the present disclosure.
FIG. 4 is a view illustrating the flow of the heat media when the fuel cell stops power generation in the fuel cell system according to one exemplary embodiment of the present disclosure.
FIG. 5 is a schematic view of a fuel cell system according to another exemplary embodiment of the present disclosure.

**** Description of Reference numerals ****

| | | | |
|---|---|---|---|
| 1: | Fuel cell system | 100: | Fuel cell |
| 110: | Signal transmitter | 200: | Heatstorage tank |
| 210: | Storage heat exchange unit | 220: | Heating heat exchange unit |
| 300: | Boiler | 310: | Main heat exchanger |
| 320: | Hot water heat exchanger | 330: | Pump |
| 340: | Three-way valve | 410: | Heat media supply line |
| 420: | Heat media recovery line | 430: | Bypass line |
| 440: | Three-way valve | 441: | First valve |
| 442: | Second valve | 450: | Temperature sensor |
| 460: | Cooling device | 470: | Expansion tank |
| 500: | Heating destination | 510: | Heating water supply line |
| 520: | Heating water recovery line | 530: | Bypass line |
| 600: | Hot water destination | 610: | Hot water line |
| 620: | Direct water supply line | 630: | Direct water line |
| 640: | Direct water branch line | 650: | Direct water supplement line |
| 700: | Controller | | |

### [Modes of the Invention]

Hereinafter, a configuration and an operation of exemplary embodiments of the present disclosure will be described in detail with reference to the accompanying drawings.

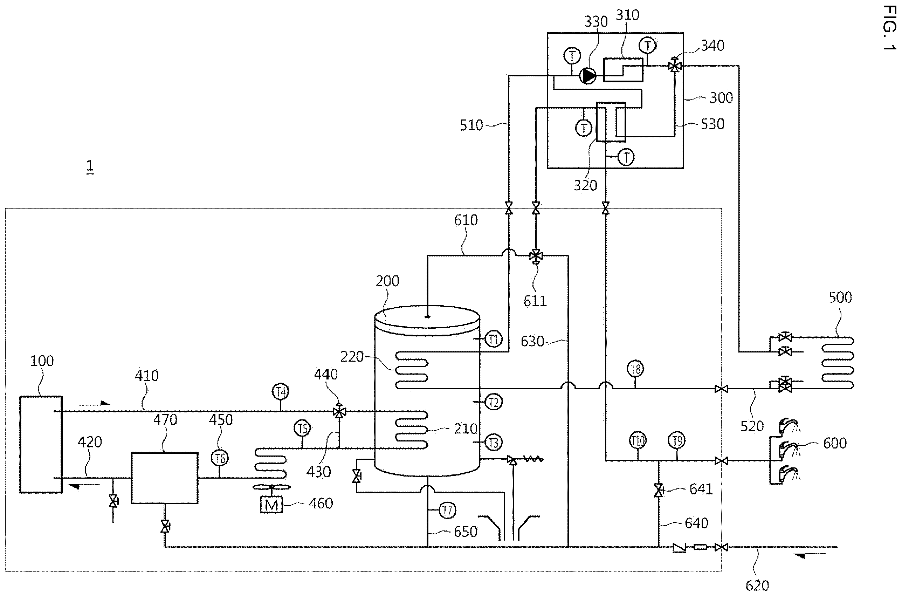

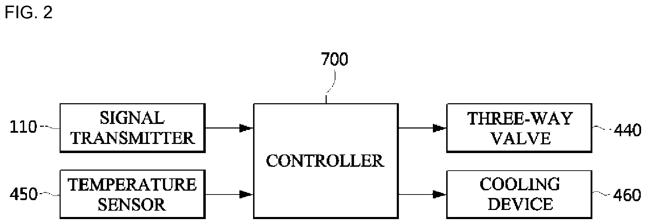

Referring to FIGS. 1 and 2, a fuel cell system 1 according to one exemplary embodiment of the present disclosure includes: a fuel cell 100 configured to generate electricity and heat by a reaction between hydrogen and oxygen; a heat storage tank 200 configured to perform heat exchange between the heat recovered from the fuel cell 100 and a fluid contained in the heat storage tank 200 to accumulate a heat source for heating or hot water; and a boiler 300 configured to heat heating water or the hot water to a predetermined heating temperature or a predetermined hot water temperature when a temperature of the heat source of the heat storage tank 200 is lower than the predetermined heating temperature or the predetermined hot water temperature set by a user, and configured to supply the heating water or the hot water to a heating destination 500 or a hot water destination 600.

The fuel cell 100 generates electric energy by an electrochemical reaction between hydrogen and oxygen and generates reaction heat and water as by-products, and various types of fuel cells generally known in the art may be used. The fuel cell 100 includes a signal transmitter 110 configured to transmit a signal to a controller 700 depending on whether the fuel cell 100 generates power or stops power generation, and a circulation pump (not shown) configured to pump heat media, which absorb the reaction heat, such that the heat media is circulated via the fuel cell 100.

The heat storage tank 200 is provided therein with a storage heat exchange unit 210 configured to perform heat exchange between the heat recovered from the fuel cell 100 and a fluid contained in the heat storage tank 200, that is, the water that will be used as the hot water, and is provided with a heating heat exchange unit 220 configured to perform heat exchange between the hot water and the heating water.

A heat media supply line 410 and a heat media recovery line 420 configured to form a circulation flow channel of the heat media for recovering the heat generated from the fuel cell 100 and transferring the heat to the heat storage tank 200 are connected between the fuel cell 100 and the storage heat exchange unit 210.

A bypass line 430 branched from the heat media supply line 410 and connected to the heat media recovery line 420 is provided between the heat media supply line 410 and the heat media recovery line 420, and a flow channel switching device configured to selectively switch the flow channel of the heat media flowing along the heat media supply line 410 to the storage heat exchange unit 210 or the bypass line 430 is provided.

In the present embodiment, the flow channel switching device includes a three-way valve 440 provided at a connection portion between the heat media supply line 410 and the bypass line 430.

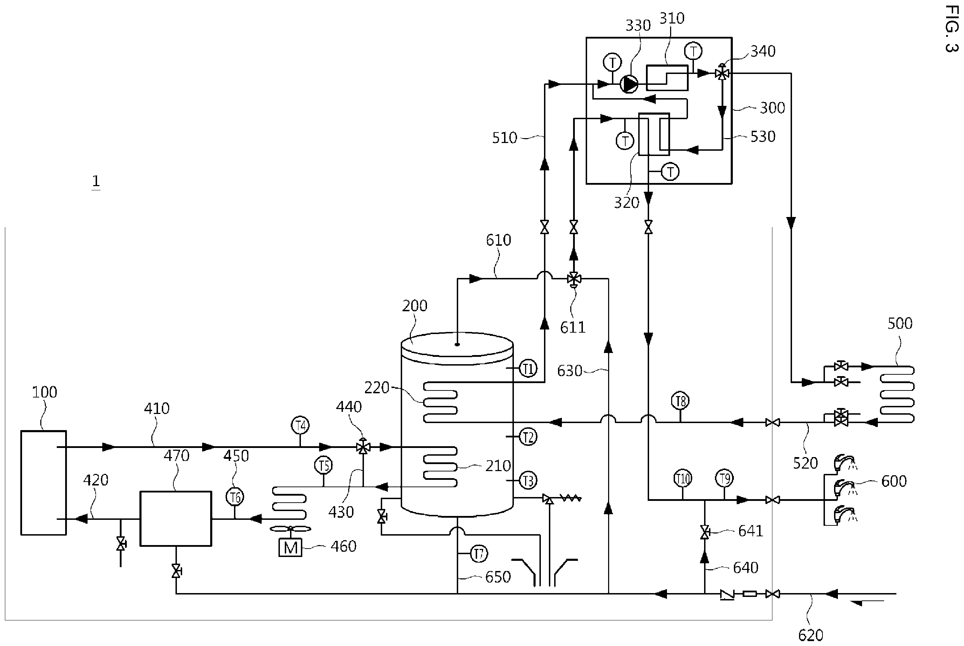

Referring to FIG. 3, when the fuel cell 100 generates power, the signal transmitter 110 provided in the fuel cell 100 transmits a power generation activation signal to the controller 700, and the controller 700 controls the three-way valve 440 such that the flow channel of the heat media flowing along the heat media supply line 410 is connected to the storage heat exchange unit 210 while the flow channel to the bypass line 430 is blocked. In this case, the heat recovered from the fuel cell 100 is transferred to the storage heat exchange unit 210 and used as a heating source for water contained in the heat storage tank 200.

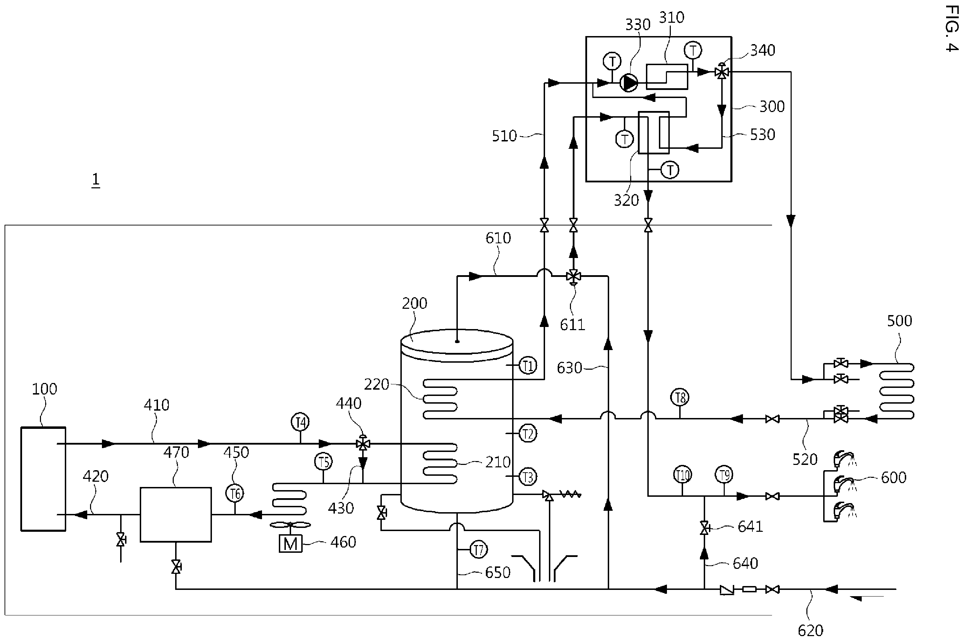

Referring to FIG. 4, when the fuel cell 100 stops the power generation, the signal transmitter 110 transmits a power generation stop signal to the controller 700, and the controller 700 controls the three-way valve 440 such that the flow channel of the heat media flowing along the heat media supply line 410 is connected to the bypass line 430 while the flow channel to the storage heat exchange unit 210 is blocked. In this case, the heat media are circulated along the heat media supply line 410, the bypass line 430, and the heat media recovery line 420, so that a cooling time of the fuel cell 100 may be shortened to improve the cooling efficiency and heat loss in the heat storage tank 200 may be minimized.

When the power generation of the fuel cell 100 is stopped, heat is not newly generated from the fuel cell 100, the heat remaining in the fuel cell 100 is absorbed and dissipated by the circulating heat media, and the heat media flowing along the heat media supply line 410 are returned to the heat media recovery line 420 through the bypass line 430 without passing through the heat storage tank 200.

In this case, the heat of the hot water contained in the heat storage tank 200, which has a temperature relatively higher than the temperature of the heat media, is not transferred to the heat media, so that the fuel cell 100 may be rapidly cooled by the heat media having a relatively low temperature and heat loss in the heat storage tank 200 may be prevented from occurring.

The heat media recovery line 420 includes a temperature sensor 450 configured to measure a temperature of the heat media recovered into the fuel cell 100 and includes a cooling device 460 configured to cool the recovered heat media. In the present embodiment, although a case in which the cooling device 460 is provided as a cooling fan configured to cool the heat media by blowing air is illustrated as an example, the cooling device 460 may be configured in various forms for cooling the recovered heat media other than the cooling fan.

A detection value for the temperature of the heat media measured by the temperature sensor 450 is transmitted to the controller 700, and the controller 700 controls an operation of the cooling device 460 such that the temperature of the heat media measured by the temperature sensor 450 does not exceed a predetermined cooling temperature (for example, 40 °C) of the heat media set for cooling the fuel cell 100. That is, the cooling device 460 is controlled so that it is to be activated when the temperature of the heat media measured by the temperature sensor 450 exceeds the predetermined cooling temperature of the heat media, and in the inverse situation the operation of the cooling device 460 is stopped.

As described above, the heat media recovery line 420 includes the temperature sensor 450 and the cooling device 460, and the temperature measured by the temperature sensor 450 is compared with the predetermined cooling temperature of the heat media to control the operation of the cooling device 460, so that the fuel cell 100 may be maintained at a low operation temperature which enables the power generation to reactivate the fuel cell 100 at a desired time.

In addition, the heat media recovery line 420 includes an expansion tank 470 configured to absorb a pressure change in a conduit line caused by expansion of the heat media and connected to a direct water supply line 620 for supplementing the heat media.

The boiler 300 serves to supply an additional heat source to the heating water or the hot water when the quantity of heat of the hot water stored in the heat storage tank 200 is smaller than that of the predetermined heating temperature or the predetermined hot water temperature set by the user, and includes a main heat exchanger 310 configured to heat the heating water by combustion heat of a burner, a hot water heat exchanger 320 configured to perform heat exchange between the heating water heated by the main heat exchanger 310 and the hot water, and a pump 330 configured to pump the heating water.

Hereinafter, the circulation flow channel of the heating water and a supply flow channel of the hot water will be described.

First, referring to the circulation flow channel of the heating water, a heating water supply line 510 is connected to an outlet of the heating heat exchange unit 220 inside the heat storage tank 200, the heating water supply line 510 is connected to an inlet of the heating destination 500 via the main heat exchanger 310 of the boiler 300, and a heating water recovery line 520 is connected between an outlet of the heating destination 500 and an inlet of the heating heat exchange unit 220.

A bypass line 530 branched from the heating water supply line 510 located at an outlet of the main heat exchanger 310 and connected to an inlet of the main heat exchanger 310 after passing through the hot water heat exchanger 320 is connected inside the boiler 300, and a three-way valve 340 for switching the flow channel is provided at a connection portion between the heating water supply line 510 and the bypass line 530.

When the heating water is used, the heating water is circulated in a state in which combustion of the burner is stopped in the boiler 300 when the quantity of the heat stored in the heat storage tank 200 satisfies the predetermined heating temperature set by the user, and the heating water is heated by the combustion heat of the burner in the boiler 300 and supplied to the heating destination 500 when the quantity of the heat stored in the heat storage tank 200 is insufficient to satisfy the predetermined heating temperature.

Next, referring to the supply flow channel of the hot water, a hot water line 610 is connected to an upper portion of the heat storage tank 200, and the hot water line 610 is connected to the hot water destination 600 via the hot water heat exchanger 320 of the boiler 300.

A direct water line 630 branched from the direct water supply line 620 is connected to the hot water line 610 located between the heat storage tank 200 and the boiler 300, and a three-way valve 611 is provided at a connection portion between the hot water line 610 and the direct water line 630.

A direct water branch line 640 branched from the direct water supply line 620 is connected to the hot water line 610 located at an inlet of the hot water destination 600, and the direct water branch line 640 includes a mixing valve 641 for adjusting a mixing rate of direct water so that the temperature of the supplied hot water corresponds to the predetermined hot water temperature.

In addition, the direct water supply line 620 is connected with a direct water supplement line 650 for supplying the direct water when an amount of a fluid in the heat storage tank 200 is insufficient.

When the hot water is used, the hot water is supplied in a state in which the combustion of the burner is stopped in the boiler 300 when the quantity of the heat stored in the heat storage tank 200 satisfies the predetermined hot water temperature set by the user, a degree of openness of the mixing valve 641 is adjusted to allow a supply temperature of the hot water to correspond to the predetermined hot water temperature, and the hot water is heated by the combustion heat of the burner in the boiler 300 such that the supply temperature of the hot water reaches the predetermined hot water temperature and is supplied to the hot water destination 600 when the quantity of heat stored in the heat storage tank 200 is insufficient to satisfy the predetermined hot water temperature.

According to the configuration as described above, the heat recovered from the fuel cell 100 and stored in the heat storage tank 200 is used as a heat source for using the heating or the hot water, and when the temperature of the heating water or the hot water supplied from the heat storage tank 200 is lower than the predetermined heating temperature or the predetermined hot water temperature set by the user, the heating water or the hot water is heated by the combustion heat of the boiler 300 so as to be supplied, so that the heating water and the hot water may be stably supplied at the predetermined temperature.

In addition, the heat source recovered from the fuel cell 100 and the heat source of the boiler 300 are used as a heating source for the heating water and the hot water, so that the fuel consumption of the boiler 300 may be reduced in comparison to a case in which only the boiler 300 is used.

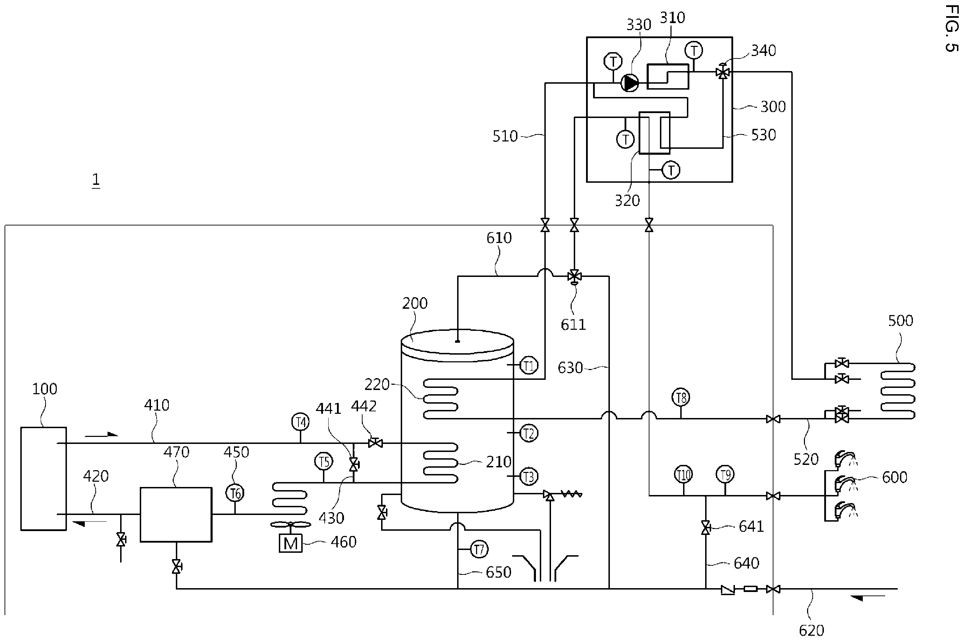

Referring to FIG. 5, the configuration of the flow channel switching device in a fuel cell system 1 according to another exemplary embodiment of the present disclosure is different from the configuration in the above embodiments, and other configurations are equally applicable.

In the present embodiment, the flow channel switching device includes: a first valve 441 provided in the bypass line 430; and a second valve 442 provided in the heat media supply line 410 at a position spaced away from a connection portion between the heat media supply line 410 and the bypass line 430 toward the heat storage tank 200, and configured to be opened or closed inversely to the first valve 441.

When the fuel cell 100 generates power, the signal transmitter 110 provided in the fuel cell 100 transmits a power generation activation signal to the controller 700, and the controller 700 performs a control to close the first valve 441 and open the second valve 442 such that the flow channel of the heat media flowing along the heat media supply line 410 is connected to the storage heat exchange unit 210 while the flow channel to the bypass line 430 is blocked.

When the fuel cell 100 stops the power generation, the signal transmitter 110 transmits a power generation stop signal to the controller 700, and the controller 700 performs a control to open the first valve 441 and close the second valve 442 such that the flow channel of the heat media flowing along the heat media supply line 410 is connected to the bypass line 430 while the flow channel to the storage heat exchange unit 210 is blocked.

## Claims

1. A fuel cell system comprising:
a fuel cell (100) configured to generate electricity and heat by a reaction between hydrogen and oxygen;
a heat storage tank (200) provided therein with a storage heat exchange unit (210) configured to perform heat exchange between the heat recovered from the fuel cell (100) and a fluid contained in the heat storage tank (200) ;
a heat media supply line (410) and a heat media recovery line (420) configured to interconnect the fuel cell (100) and the storage heat exchange unit (210) to form a circulation flow channel of heat media;
a bypass line (430) branched from the heat media supply line (410) and connected to the heat media recovery line (420);
a flow channel switching device configured to selectively switch the flow channel of the heat media flowing along the heat media supply line (410) to the storage heat exchange unit (210) or the bypass line (430); and
a controller (700) configured to control the flow channel switching device such that the flow channel of the heat media flowing along the heat media supply line (410) is connected to the storage heat exchange unit (210) when the fuel cell (100) generates power, and the flow channel of the heat media flowing along the heat media supply line (410) is connected to the bypass line (430) when the fuel cell (100) stops power generation.

2. The fuel cell system of claim 1, wherein the flow channel switching device includes a three-way valve (440) provided at a connection portion between the heat media supply line (410) and the bypass line (430).

3. The fuel cell system of claim 1, wherein the flow channel switching device includes:
a first valve (441) provided in the bypass line (430); and
a second valve (442) provided in the heat media supply line (410) at a position spaced away from a connection portion between the heat media supply line (410) and the bypass line (430) toward the heat storage tank (200), and configured to be opened or closed inversely to the first valve (441).

4. The fuel cell system of claim 1, wherein:
the heat media recovery line (420) includes a temperature sensor (450) configured to measure a temperature of the heat media recovered into the fuel cell (100) and includes a cooling device (460) configured to cool the recovered heat media; and
the controller (700) controls an operation of the cooling device (460) such that the temperature of the heat media measured by the temperature sensor (450) does not exceed a predetermined cooling temperature of the heat media set for cooling the fuel cell (100).

5. The fuel cell system of claim 1, wherein:
the heat storage tank (200) includes a heating heat exchange unit (220) configured to perform heat exchange between the fluid contained in the heat storage tank (200) and heating water;
the heating water which is heat-exchanged at the heating heat exchange unit (220) is used for heating; and
when a temperature of the heating water passing through the heating heat exchange unit (220) is lower than a predetermined heating temperature, the heating water is heated by a boiler (300) to reach the predetermined heating temperature and supplied to a heating destination (500).

6. The fuel cell system of claim 1, wherein:
the fluid contained in the heat storage tank (200) is used as hot water; and
when a temperature of the hot water contained in the heat storage tank (200) is lower than a predetermined hot water temperature, the hot water supplied from the heat storage tank (200) is heated by a boiler (300) to reach the predetermined hot water temperature and supplied to a hot water destination (600).
